(19) Europäisches Patentamt
European Patent Office
Office européen des brevets

(11) Publication number: 0 177 647 B1

(12) # EUROPEAN PATENT SPECIFICATION

(45) Date of publication of patent specification: 26.07.89

(51) Int. Cl.$^4$: B 29 C 33/64

(21) Application number: 84306824.8

(22) Date of filing: 05.10.84

(54) **Preparation of lignocellulosic isocyanate molded compositions using a copolymer of a functional polysiloxane and a carboxylic acid or salt thereof as release agent.**

(43) Date of publication of application:
16.04.86 Bulletin 86/16

(45) Publication of the grant of the patent:
26.07.89 Bulletin 89/30

(84) Designated Contracting States:
BE DE FR GB IT NL SE

(56) References cited:
EP-A-0 061 261
EP-A-0 116 966
DE-B-1 245 012
FR-A-2 255 329
US-A-3 919 017

(73) Proprietor: ARCO CHEMICAL TECHNOLOGY INC.
3 Christina Centre Suite 902 201 N Walnut Street
Wilmington Delaware 19801 (US)

(72) Inventor: Nguyen, Tinh
201 Sportsman Way
Gaithersburg, MD 20878 (US)
Inventor: Gaul, James M.
224 Autumn Drive
Exton, PA 19341 (US)

(74) Representative: Cropp, John Anthony David et al
MATHYS & SQUIRE 10 Fleet Street
London, EC4Y 1AY (GB)

EP 0 177 647 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to the compression molding of lignocellulosic materials into composite bodies, sheets and the like and more particularly to a method for preparing of particle board with a polyisocyanate binder and the use of a functional polysiloxane-monocarboxylic acid or metal salt copolymer as a release agent capable of providing multiple release from the forming mold surfaces.

The molding of lignocellulosic and lignocellulosic containing fibers, particles or layers to form composite articles is known. Organic di- and polyisocyanates as useful binders for lignocellulose materials have been known for some time and give to particle board products increased stability and mechnical strength; see, for example, 3,428,592; 3,440,189; 3,557,263; 3,636,199; 3,870,665; 3,919,017 and 3,930,110. It is also known in the art that the isocyanate binders are mixed with the wood particles utilized as the base for the particle board. A wood chip or particle and isocyanate binder mixture is then formed into a mat and molded with pressure and temperature to the desired size or shape. Water emulsion polyisocyanate binder systems for use with lignocellulosic particles to prepare particle board are also known. A principal disadvantage of the use of isocyanates in the preparation of particle board is due to their excellent adhesive properties. Thus, isocyanate systems, either the water emulsion or the straight polyisocyanate binders, stick tenaciously to the metal caul plates which are employed to support the wood particles during transporting and the pressing or molding processes. The resultant poor release of the molded particle board from the caul or mold surface creates difficulty in the cleaning and automatic handling of the cauls. In order to prevent the sticking problem, external release agents have been developed and applied to the caul plates or platens or mat surface as described for example in U.S. Patent No. 4,110,397. Other conventional release agents such as oils, waxes, polishes, silicones and polytetrafluoroethylene have been unsatisfactory as have the specialized urethane release agents including those used in structural foam applications. Another method to overcome the sticking problem has been to overlay the isocyanate bound lignocellulosic particles with a veneer of wood as shown, for example, in U.S. Patent Nos. 3,390,110; 4,197,219 and 3,919,017, or with the use of a release paper. These methods have the disadvantage of either adding more cost to the product or of not fully utilizing the superiority of the isocyanate binder. Many of the release agents developed to date have to be applied during every composite production cycle in large quantities to be effective.

It is an object of the present invention to provide novel compositions which serve as release agents and provide for multiple release of the molded articles, are readily applied and adhere to the mold surfaces, and need only be applied in small amounts.

According to the present invention, there is provided a process for the preparation of lignocellulosic composite molded articles wherein lignocellulosic particles are contacted with an organic polyisocyanate-based binder composition and the treated particles are subsequently formed into molded articles by the application of heat and pressure, characterised in that a film coating of a copolymeric reaction product of a functional polysiloxane and a monocarboxylic acid or metal salt thereof is applied to the mold surface or surfaces to facilitate release of the lignocellulosic molded article, said functional polysiloxane having the formula:

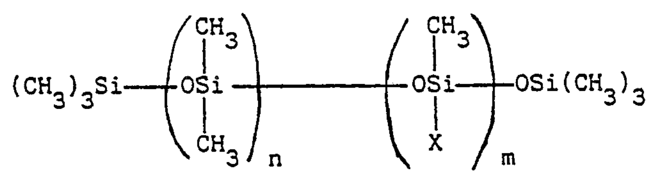

wherein n is an integer of from 5 to 30, m is an integer of from 1 to 20 and X is a group selected from $-CH_2OH$, $-CH(CH_3)OH$, $-C(CH_3)_2OH$, $-COOH$ or $-OH$, and said monocarboxylic acid or metal salt thereof being a compound having the formula $[CH_3-(CH_2)_y-COO]_xZ$ wherein y is an integer of from 5 to 24, Z is selected from hydrogen, Na, Li, Ca, Ba, Cd, Mg, K and Fe and x is the valency of Z, or a hydroxy-substituted derivative thereof.

DETAILED DESCRIPTION OF THE INVENTION

In accordance with the invention, lignocellulosic composite molded articles, particularly particle board, are prepared by bonding together wood chips or other lignocellulosic material using heat and pressure with an organic polyisocyanate employed as the binding agent and with the application of a film of release agent to the mold surface or surfaces by dipping, spraying or wiping of the said copolymer of a functional polysiloxane and a monocarboxylic acid or metal salt thereof. To form the copolymer release agent of the present invention, a functional polysiloxane having the formula given above is reacted with a monocarboxylic acid or metal salt thereof, of the kind defined above. For essentially permanent release or longer production use cycles the mold surface or surfaces with film applied may be heated to between 75°C and 200°C for from 1 to 5 minutes before use.

The molded lignocellulosic composite such as, for example, particle board or flake board is generally prepared by spraying the particles with the polyisocyanate binder as they are being mixed or agitated in

suitable and conventional equipment such as a blender. Suitably, the polyisocyanate binder use level, based on the weight of oven dried (0% moisture content) lignocellulosic material is from about 1.5 to 12 and preferably 2.5 to 6.5 weight percent. Other materials such as fire retardants may also be added to the particles or sprayed with the binder during the blending or mixing step.

After forming a uniform mixture the coated lignocellulosic particles are formed into a loose mat or felt in the desired proportions onto a caul plate of polished aluminum or steel which serves to carry the "cake" into the heated press to consolidate the wood particles into a board of desired thickness. Temperatures of the press are generally between 140° and 220°C. and pressures of from $6.9 \times 10^2$ kPa to $4.1 \times 10^3$ kPa (100 to 600 psi). Pressing times are from about 1 to 10 preferably 3 to 5 minutes. Pressing times, temperatures and pressures vary widely depending on the thickness of the board produced, the desired density of the board, the size of the lignocellulosic particles used, and other factors well known in the art.

The isocyanate binding agent will generally be an organic polyisocyanate used alone but may also be in admixture with another type of binding agent, e.g. a synthetic resin glue, or in admixture with diluents such as propylene carbonate. The isocyanate may be applied in liquid form, as a solution in an inert solvent or in the form of an aqueous emulsion.

The polyisocyanate component which is used in the present invention in the binder system can be any organic polyisocyanate and include aliphatic, alicyclic and aromatic polyisocyanates that contain at least two isocyanate groups per molecule. Such polyisocyanates include the diisocyanates and higher functionality isocyanates. Mixtures of polyisocyanates may be used which for example are the mixtures of di- and higher functional polyisocyanates produced by phosgenation of aniline-formaldehyde condensate or as described in U.S. Patent Nos. 3,962,302 and 3,919,279. The organic polyisocyanates may be isocyanate-ended prepolymers made by reacting under standard known conditions, an excess of a polyisocyanate with a polyol which on a polyisocyanate to polyol basis may range from about 20:1 to 2:1 and include for example polyethylene glycol, polypropylene glycol, triethylene glycol, etc. as well as glycols or polyglycols partially esterified with carboxylic acids including polyester polyols and polyether polyols. Illustrative of organic polyisocyanates which may be employed include for example, toluene-2,4- and 2,6-diisocyanates or mixtures thereof, diphenylmethane diisocyanate, m- and p-phenylene diisocyanates or mixtures thereof, m- and p-diphenylene diisocyanates, polymethylene polyphenyl isocyanates, naphthalene-1, 5-diisocyanate, chlorophenylene diisocyanate, α,α-xylene diisocyanate, triphenylmethane triisocyanate, hexamethylene diisocyanate, 3,3'-ditolylene-4,4-diisocyanate, butylene 1,4-diisocyanate, octylene-1,8-diisocyanate, 1,4-, 1,3- and 1,2-cyclohexylene diisocyanate and in general the polyisocyanates disclosed in U.S. Patent No. 3,577,358, 3,012,008 and 3,097,191. The preferred polyisocyanates are the diphenylmethane diisocyanate 2,4' and 4,4' isomers including the 2,2' isomer and the higher functional polyisocyanate and polymethylene polyphenyl isocyanate mixtures, which may contain from about 20 to 85 weight percent of the diphenylmethane diisocyanate isomers. Typical of the preferred polyisocyanates are those sold commercially as "Rubinate-M" (Rubicon Chemicals, Inc.). In general the organic polyisocyanates will have a molecular weight in the range between about 100 and 10,000. The aqueous organic polyisocyanate or isocyanate-terminated prepolymer emulsions are generally prepared by using any of the techniques known in the art for the preparation of aqueous emulsions or dispersions prior to use of the composition as binder. In general the polyisocyanate is dispersed in water in the presence of an emulsifying or surface active agent which may be any of the emulsifying agents also known in the art including anionic and nonionic agents. Preparation of the aqueous emulsions may be carried out as described in U.S. Patent Nos. 3,996,154; 4,143,014 and 4,257,995.

The lignocellulosic materials employed to prepare the molded compositions using polyisocyanate binders include wood chips, wood fibers, shavings, sawdust, wood wool, cork bark and the like products from the woodworking industry. Fibers, particles, etc. from other natural products which are lignocellulosic such as straw, flax residues, dried weeds and grasses, nut shells, hulls from cereal crops such as rice and oats and the like may be used. In addition, the lignocellulosic materials may be mixed with inorganic flakes or fibrous material such as glass fibers or wool, mica and asbestos as well as with rubber and plastic materials in particulate form. The lignocellulose may contain a moisture (water) content of up to 25 percent by weight but preferably contains between 4 and 12 percent by weight moisture.

The release agents of the present invention consisting of a copolymer of a functional polysiloxane and a monocarboxylic acid or metal salt thereof are prepared by reacting at a temperature of from 50°C to 150°C. preferably 90°C to 110°C, an excess of a functional polysiloxane (hereinafter referred to as a silanol terminated polydimethylsiloxane) having the formula

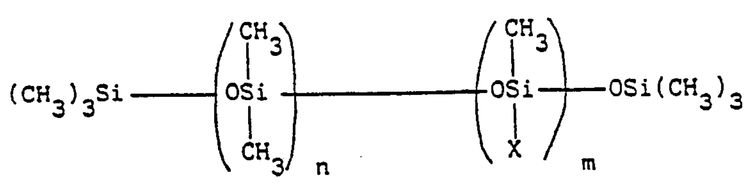

wherein n is an integer of from 5 to 30, m is an integer of from 1 to 20 and X is a group selected from $-CH_2OH$, $-CH(CH_3)OH$, $-COOH$, $-C(CH_3)_2OH$ or OH, with a monocarboxylic acid or a metal salt of the monocarboxylic acid having the formula $[CH_3-(CH_2)_y-COO]_xZ$ wherein y is an integer of from 5 to 24, Z is

selected from hydrogen, Na, Li, Ca, Ba, Cd, Mg, K and Fe and x is the valency of Z. The acid or salt may also be hydroxy substituted such as for example 12 Hydroxystearic acid. The reaction may be carried out in the presence of inert solvents such as the aromatic or aliphatic hydrocarbons, e.g. toluene, xylene, benzene, heptane, hexane, etc. 5 to 50% solids solutions may be prepared by the condensation process but are preferably prepared and applied as 10 to 20% solids solutions. Typical monocarboxylic acids or metal salts which may be employed to prepare the copolymer are for example capric, lauric, palmitic, stearic, oleic, linoleic and the like as well as potassium oleate, calcium stearate, iron stearate, sodium palmitate, cadmium stearate, magnesium decanoate, etc.

As indicated herein above organopolysiloxane fluids may be employed along with the copolymeric functional polysiloxane-monocarboxylic acid or monocarboxylic acid salt release agents as a diluent and are used in amounts of up to 25 weight percent, preferably from 10 to 20 weight percent based on the total copolymerorganopolysiloxane fluid mixture. The organopolysiloxane fluids suitable for use in this invention are generally alkyl-terminated polysiloxane fluids having from 1 to 18 carbon atoms bonded to the silicon atom. Examples of suitable organopolysiloxane fluids are those having alkyl radicals such as methyl, ethyl, propyl, butyl, hexyl, octyl, decyl, dedecyl, tetradecyl, hexadecyl, octadecyl and the like; aryl radicals such as phenyl and naphthyl and mixtures thereof. Generally, it is preferred that the organopolysiloxane be free of terminal-hydroxyl groups; however, a small number of terminal-hydroxyl groups will not materially affect the mold release composition. The organopolysiloxane may have a minor proportion of molecules with only one hydroxyl group or there may be a small number of molecules present carrying in excess of two hydroxyl groups. However, as mentioned previously, it is preferred that the organopolysiloxane be substantially free of hydroxyl groups. In general, the polysiloxane fluids should have a molecular weight of between about 3,000 and 90,000 which is equivalent to a viscosity of between about 0.05 and 100 Pa.s (50 and 100,000 centipoises), preferably from about 0.1 to 5 Pa.s (100 to 5,000 centipoises). Optimum results have been obtained in the lower portion of these ranges such as from about 0.2 to 0.5 Pa.s (200 to 500 centipoises). In addition, it is possible to combine high and low viscosity fluids to form a fluid having the desired viscosity range.

The organopolysiloxane fluids used in accordance with this invention may be represented by the formula

$$R-\underset{R''}{\overset{R'}{\underset{|}{\overset{|}{Si}}}}-\left[O-\underset{R''}{\overset{R'}{\underset{|}{\overset{|}{Si}}}}-\right]_y O-\underset{R''}{\overset{R'}{\underset{|}{\overset{|}{Si}}}}-R$$

wherein R, R′ and R″ which may be the same or different represent organic groups having from 1 to 18 carbon atoms, preferably alkyl groups having from 1 to 4 carbon atoms, and y has a value of from 80 to about 150,000.

The novel mold release agents of the instant invention, whether the copolymeric release agent alone or the copolymer admixed with an organopolysiloxane fluid, may be employed in a liquid organic solvent which would preferably be sufficiently volatile to vaporize during the application process. Preferred solvents include toluene, xylene, benzene, naphtha type solvents, higher $C_4$ to $C_{10}$ alcohols such as isobutanol and hydrocarbon solvents such as perchloroethylene.

The copolymeric release agent of the present invention may be applied to the mold surfaces as a concentrated or dilute solution, water emulsion or dispersion. It is preferred that the release agent composition be dissolved in a volatile organic solvent such as a mixture of toluene and isobutanol and then sprayed, wiped or brushed onto the mold surfaces in the form of a thin film. This may best be obtained by rubbing the mold surface or surfaces with a swab saturated with a solution of the release composition. However, when practical, the mold surfaces may be sprayed with the composition to form a thin film thereon.

Once the release composition has been applied to the mold surfaces, it may be used immediately. However, it is preferred that the coating be dried especially when an organic solvent has been used. More preferably, as indicated hereinbefore the coated mold surfaces are heated to between 75° to 200°C. for from 1 to 5 minutes to fill all pores and openings and to provide for an essentially permanent release or longer production use cycles.

The following examples are provided to illustrate the invention in accordance with the principles of this invention, including examples of a comparative nature, but are not to be construed as limiting the invention in any way except as indicated by the appended claims.

## Example 1

580 grams of pine wood chips dried to a moisture content of 6 percent were placed in an open tumbler-mixer. During tumbling 16 grams of a diphenylmethane diisocyanatepolymethylene polyphenylisocyanate (PMDI) mixture having a 46.5 percent diphenylmethane diisocyanate content as a binder was sprayed evenly onto the wood chips by an air pressurised system. Two new aluminum caul plates 305 × 305 × 4.75

mm (12″ × 12″ × 3⁄16″) were wiped with a cloth saturated with a mixture of 10 parts by weight of a copolymer of a silanol terminated polydimethyl siloxane wherein X is —$CH_2OH$, having a molecular weight of 28,000 and 12 hydroxy stearic acid and 90 parts by weight toluene. The copolymer was prepared by charging 1 part by weight of the silanol terminated siloxane and 1 part by weight 12-hydroxy stearic acid into a 250 ml reaction flask in 50% by weight toluene. The reaction was run for 4 hours at 95°C. in nitrogen with stirring. The reaction was cooled and diluted with toluene to give a 10% solids solution. The polyisocyanate coated wood chips were then preformed in a box 267 mm (10.5″) square an 305 mm (12″) high which was supported by one of the release agent coated caul plates and prepressed to form a thick mat. The box was then taken out and the second coated caul plate placed on top of the mat. The whole assembly was subjected to a temperature of 190°C., pressed to stops at a thickness of 13 mm and held for 4 minutes and the pressure released. The lignocellulosic (wood chip board) composite was easily released from the caul plates. The board making procedure as above was repeated six additional times using the same originally coated caul plates with easy release of the composite.

Example 2

The procedure of Example 1 was repeated except that the aluminum caul plates wiped with the 28,000 mol wt. silanol terminated polydimethyl siloxane-12 hydroxy stearic acid copolymer release agent were heated at 176°C. for 3 minutes prior to use. Seven repeated cycles of board preparation and release at 190°C. were recorded.

Examples 3 to 8

Various copolymers of silanol terminated polydimethyl siloxanes, molecular weight 28,000, with a monocarboxylic acid or metal salt thereof were prepared by charging 1 part by weight of the siloxane and 1 part by weight of the acid or metal salt into a reaction flask with 50% by weight toluene. The reaction was run for four hours at 95°C in nitrogen with stirring and then cooled and diluted with toluene to provide a 10% solids solution. The procedure of Example 1 was repeated to produce particle board using the release agent and giving the release cycles as indicated below.

| Example No. | Copolymer Release Agent | Release Cycles at 190°C |
|---|---|---|
| 3 | Silanol terminated Polydimethyl Siloxane wherein X = —$CH_2OH$ and Calcium Stearate | 5 |
| 4 | Silanol terminated Polydimethyl Siloxane wherein X = —$CH_2OH$ and Iron Stearate | 6 |
| 5 | Silanol terminated Polydimethyl Siloxane wherein X carbonol = and Potassium Oleate | 6 |
| 6 | Silanol terminated Polydimethyl Siloxane wherein X = —COOH and 12-Hydroxy Stearic Acid | 7 |
| 7 | Silanol terminated Polydimethyl Siloxane wherein X = —$CH_2OH$ and Capric (decanoic) Acid | 6 |
| 8 | Silanol terminated Polydimethyl Siloxane wherein X = —$CH_2OH$ and Palmitic (hexadecanoic) Acid | 7 |

Example 9

The procedure of Example 2 was repeated employing 85% of the copolymer of Example 1 mixed with 15% polysiloxane fluid and diluted to a 10% solids solution with toluene. Six repeated cycles of particle board preparation and release at 190°C. were recorded.

Example 10

The procedure of Example 2 was repeated employing an 80:20 mixture of the copolymer of Example 3 and polydimethyl siloxane fluid diluted to 10% in a 50:50 mixture of toluene and isobutanol. Six release cycles were recorded at 190°C.

Example 11 Control

Example 1 was repeated except that no release agent was applied to the caul plates. The pressed lignocellulosic composite could not be released even after cooling down.

Example 12 Control

Examples 1 and 2 were repeated except that the caul plates in three composite preparations were wiped with a 15% solution of zinc stearate, aluminum stearate and lithium stearate in isobutanol. Only one cycle of release was recorded with each when hot (190°C.).

**Claims**

1. A process for the preparation of lignocellulosic composite molded articles wherein lignocellulosic particles are contacted with an organic polyisocyanate-based binder composition and the treated particles are subsequently formed into molded articles by the application of heat and pressure, characterised in that a film coating of a copolymeric reaction product of a functional polysiloxane and a monocarboxylic acid or metal salt thereof is applied to the mold surface or surfaces to facilitate release of the lignocellulosic molded article, said functional polysiloxane having the formula:

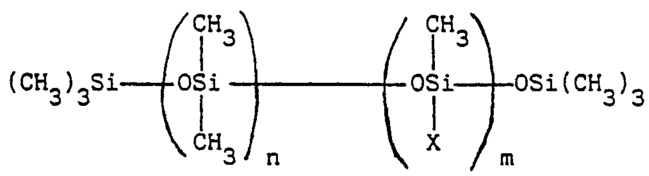

wherein n is an integer of from 5 to 30, m is an integer of from 1 to 20 and X is a group selected from $—CH_2OH$, $—CH(CH_3)OH$, $—C(CH_3)_2OH$, $—COOH$ or $—OH$, and said monocarboxylic acid or metal salt thereof being a compound having the formula $[CH_3—(CH_2)_y—COO]_xZ$ wherein y is an integer of from 5 to 24, Z is selected from hydrogen, Na, Li, Ca, Ba, Cd, Mg, K and Fe and x is the valency of Z, or a hydroxy-substituted derivative thereof.

2. A process according to Claim 1 wherein the lignocellulosic composite article is particle board.

3. A process according to Claim 1 or Claim 2, wherein the lignocellulosic composite is compressed between metal plattens at a temperature of from 140°C to 220°C and a pressure of from $6.9 \times 10^2$ kPa to $4.2 \times 10^3$ kPa (100 psi to 600 psi) for a period of from 1 to 10 minutes, preferably 3 to 5 minutes.

4. A process according to Claim 1 wherein the coated mold surface or surfaces are heated at a temperature of from 75°C to 200°C for a period of from 1 to 5 minutes prior to preparation of lignocellulosic composite molded articles.

5. A process according to any one of Claims 1 to 4 wherin the organic polyisocyanate binder is selected from diphenylmethane diisocyanate and polymethylene polyphenyl polyisocyanates containing from 20 to 85 percent by weight diphenylmethane diisocyanate.

6. A process according to any one of Claims 1 to 5 wherein in the functional polysiloxane X is $—CH_2OH$, $—C(CH_3)_2OH$ or $—COOH$.

7. A process according to any one of Claims 1 to 6 wherein the monocarboxylic acid of the copolymer is selected from 12-hydroxy stearic acid, palmitic acid and stearic acid.

8. A process according to any one of Claims 1 to 7 wherein the monocarboxylic acid metal salt is selected from calcium stearate, iron stearate and potassium oleate.

9. A process according to any one of claims 1 to 8 wherein organopolysiloxane fluids are added as diluent in an amount of up to 25 percent, and preferably between 10 and 20 percent, by weight, based on the mixture of said fluids and the copolymeric reaction product.

10. A process according to any one of the preceding claims, wherein the copolymeric reaction product, or mixture of copolymeric reaction product and organopolysiloxane fluids, is applied in admixture with a solvent which is preferably selected from toluene and isobutanol and mixtures thereof.

11. A moulded article, e.g. a composition board product, obtained by the process claimed in any one of the preceding claims.

12. As a novel composition of matter, a copolymeric reaction product as specified in any one of claims 1, 6, 7 and 8.

**Patentansprüche**

1. Verfahren zur Herstellung von geformten Lignocellulose-Verbundgegenständen, bei dem man Lignocelluloseteilchen mit einer organischen Bindemiettelzusammensetzung auf Polyisocyanatbasis in Kontakt bringt und die behandelten Teilchen anschließend durch Anwendung von Wärme und Druck zu gepreßten Gegenständen verformt, dadurch gekennzeichnet, daß man eine Filmbeschichtung aus einem copolymeren Reaktionsprodukt eines funktionellen Polysiloxans und einer Monocarbonsäure oder deren

Metallsalz auf die Oberfläche(n) der Form aufbringt, um das Entformen des geformten Lignocellulose-Gegenstandes zu fördern, wobei das funktionelle Polysiloxan die folgende Formel aufweist:

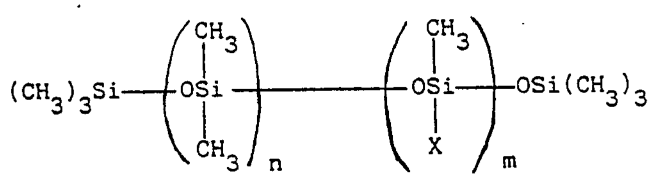

worin n eine ganze Zahl von 5 bis 30 ist, m eine ganze Zahl von 1 bis 20 ist, und X eine Gruppe ausgewählt aus $—CH_2OH$, $—CH(CH_3)OH$, $—C(CH_3)_2OH$, $—COOH$ oder $—OH$ ist, und die Monocarbonsäure oder ihr Metallsalz eine Verbindung der Formel $[CH_3—(CH_2)_y—COO]_xZ$ ist, worin y eine ganze Zahl von 5 bis 24 ist, Z eine Gruppe ausgewählt aus Wasserstoff, Na, Li, Ca, Ba, Cd, Mg, K und Fe ist, und x die Valenz von Z ist, oder ein hydroxysubstituiertes Derivat davon.

2. Verfahren nach Anspruch 1, bei dem der Lignocellulose-Verbundgegenstand eine Spanplatte ist.

3. Verfahren nach Anspruch 1 oder 2, bei dem der Lignocellulose-Verbundgegenstand zwischen Metallplatten bei einer Temperatur von 140°C bis 220°C und einem Druck von $6{,}9 \times 10^2$ kPa und $4{,}2 \times 10^3$ kPa (100 psi bis 600 psi) für einen Zeitraum von 1 bis 10 Minuten, vorzugsweise 3 bis 5 Minuten gepreßt wird.

4. Verfahren nach Anspruch 1, bei dem die beschichtete Formoberfläche oder -oberflächen bei einer Temperatur von 75°C bis 200°C für einen Zeitraum von 1 bis 5 Minuten, vor der Herstellung der geformten Lignocellulose-Verbundgegenstände erhitzt wird.

5. Verfahren nach einem der Ansprüche 1 bis 4, bei dem die organische Bindemittelzusammensetzung auf Polyisocyanatbasis aus Diphenylmethandiisocyanat und Polymethylenpolyphenylpolyisocyanaten, die 20 bis 85 Gew.-% Diphenylmethandiisocyanat enthalten, ausgewählt wird.

6. Verfahren nach einem der Ansprüche 1 bis 5, bei dem im funktionellen Polysiloxan X aus $—CH_2OH$, $—C(CH_3)_2OH$ oder $—COOH$ ausgewählt wird.

7. Verfahren nach einem der Ansprüche 1 bis 6, bei dem die Monocarbonsäure des Copolymers aus 12-Hydroxystearinsäure, Palmitinsäure und Stearinsäure ausgewählt wird.

8. Verfahren nach einem der Ansprüche 1 bis 7, bei dem das Metallsalz der Monocarbonsäure aus Calciumstearat, Eisenstearat und Kaliumoleat ausgewählt wird.

9. Verfahren nach einem der Ansprüche 1 bis 8, bei dem man Organopolysiloxanflüssigkeiten als Verdünnungsmittel in einer Menge bis zu 25 Gew.-% und vorzugsweise zwischen 10 und 20 Gew.-%, bezogen auf die Mischung aus den Flüssigkeiten und dem copolymeren Reaktionsprodukt, zugibt.

10. Verfahren nach einem der vorhergehenden Ansprüche, bei dem das copolymere Reaktionsprodukt oder eine Mischung aus dem copolymeren Reaktionsprodukt und den Organopolysiloxanflüssigkeiten, vermischt mit einem Lösungsmittel, das vorzugsweise aus Toluol, Isobutanol und Mischungen davon ausgewählt wird, aufgebracht wird.

11. Geformter Gegenstand, z.B. eine zusammengesetzte Platte, hergestellt nach dem Verfahren gemäß einem der Ansprüche 1 bis 10.

12. Copolymeres Reaktionsprodukt, wie in einem der Ansprüche 1, 6, 7 und 8 spezifiziert, als neuen Stoff.

**Revendications**

1. Procédé pour la préparation d'articles moulés en composite lignocellulosique dans lequel des particules lignocellulosiques sont mises en contact avec une composition de liant à base de polyisocyanate organique et les particules traitées sont ensuite formées en articles moulés par l'application de chaleur et de pression, caractérisé en ce qu'un revêtement pelliculaire d'un produit de réaction copolymère d'un polysiloxane fonctionnel et d'un acide monocarboxylique ou d'un sel métallique de celui-ci, est appliqué sur la ou les surfaces du moule pour faciliter le démoulage de l'article lignocellulosique moulé, ce polysiloxane fonctionnel ayant la formule:

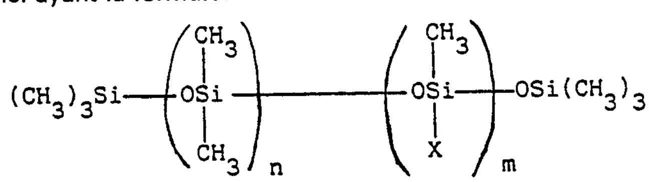

dans laquelle n est un entier de 5 à 30, m est un entier de 1 à 20 et X est un groupe choisi parmi $—CH_2OH$, $—CH(CH_3)OH$, $—C(CH_3)_2OH$, $—COOH$ ou $—OH$, et cet acide monocarboxylique ou son sel métallique étant un composé ayant la formule $[CH_3—(CH_2)_y—COO]_xZ$ où y est un entier de 5 à 24, Z est choisi parmi un atome d'hydrogène, Na, Li, Ca, Ba, Cd, Mg, K et Fe, et x est la valence de Z, ou un dérivé hydroxy-substitué de celui-ci.

2. Procédé suivant la revendication 1, caractérisé en ce que l'article en composite lignocellulosique est un panneau de particules.

3. Procédé suivant la revendication 1 ou la revendication 2, caractérisé en ce que le composite lignocellulosique est comprimé entre des platines métalliques à une température de 140 à 220°C et sous une pression de 6,9 × $10^2$ kPa à 4,2 × $10^3$ kPa (100 à 600 psi) pendant une période de 1 à 10 minutes, de préférence de 3 à 5 minutes.

4. Procédé suivant la revendication 1, caractérisé en ce que la ou les surfaces du moule sont chauffées à une température de 75°C à 200°C pendant une période de 1 à 5 minutes avant la préparation des articles moulés en composite lignocellulosique.

5. Procédé suivant l'une quelconque des revendications 1 à 4, caractérisé en ce que le liant de type polyisocyanate organique est choisi parmi le diphénylméthane diisocyanate et les polyméthylène polyphényl polyisocyanates contenant de 20 à 85% en poids de diphénylméthane diisocyanate.

6. Procédé suivant l'une quelconque des revendications 1 à 5, caractérisé en ce que dans le polysiloxane fonctionnel, X est $—CH_2OH$, $—C(CH_3)_2OH$ ou $—COOH$.

7. Procédé suivant l'une quelconque des revendications 1 à 6, caractérisé en ce que l'acide monocarboxylique du copolymère est choisi parmi l'acide 12-hydroxy-stéarique, l'acide palmitique et l'acide stéarique.

8. Procédé suivant l'une quelconque des revendications 1 à 7, caractérisé en ce que le sel métallique de l'acide monocarboxylique du copolymère est choisi parmi le stéarate de calcium, le stéarate de fer et l'oléate de potassium.

9. Procédé suivant l'une quelconque des revendications 1 à 8, caractérise en ce que des fluides de type organopolysiloxane sont ajoutés comme diluant en une quantité allant jusqu'à 25% et de préférence de 10 à 20% en poids par rapport au mélange de ces fluides et du produit de réaction copolymère.

10. Procédé suivant l'une quelconque des revendications 1 à 9, caractérisé en ce que le produit de réaction copolymère ou un mélange du produit de réaction copolymère et des fluides de type organopolysiloxane, est appliqué en mélange avec un solvant qui est de préférence choisi parmi le toluène et l'isobutanol et leurs mélanges.

11. Article moulé, par exemple un panneau en composite, caractérisé en ce qu'il est obtenu par le procédé suivant l'une quelconque des revendications précédentes.

12. Nouvelle composition de matière, caractérisée en ce qu'elle est un produit de réaction copolymère tel que spécifié dans l'une quelconque des revendications 1, 6, 7 et 8.